# EUROPEAN PATENT APPLICATION

(11) **EP 4 814 778 A1**
(43) Date of publication of application: **30.09.2026**
(21) Application number: 26166617.6
(22) Date of filing: 23.03.2026
(51) Int. Cl.: G06F 30/392

(54) **MERGED-HEIGHT CELL SEMICONDUCTOR DEVICE STRUCTURE AND METHODS OF FORMING SAME**

(30) Priority: 28.03.2025 US 202563780030 P; 14.01.2026 US 202619448731
(71) Applicant: Samsung Electronics Co., Ltd., Suwon-si, Gyeonggi-do 16677 (KR)
(72) Inventor: SHAJI, Sandra Maria, San Jose, CA 95134 (US); ZHU, Xuelian, San Jose, CA 95134 (US); HUANG, Victor, San Jose, CA 95134 (US); KWON, Jiwook, San Jose, CA 95134 (US); CHOI, Subin, San Jose, CA 95134 (US); KUMAR, Aravindh, San Jose, CA 95134 (US); SIMKA, Harsono, San Jose, CA 95134 (US)
(74) Representative: Kuhnen & Wacker Patent- und Rechtsanwaltsbüro PartG mbB

(57) **Abstract**

A semiconductor cell architecture is disclosed including a merged-height cell (310), also known as a hyper or booster cell, having a cell height, CH, approximately one-and-one-half times that of a base unit cell (308) (1.5×CH). The base unit cell (308) follows a P/N/P/N vertical placement, while the merged-height cell (310) follows a P/N/N/P configuration. The merged-height cell (310) is vertically offset by about one-quarter cell height (0.25×CH) such that the nanosheet centers of NFET and PFET active regions in the merged-height cell (310) align with those in the base unit cell (308). This alignment allows direct abutment between base and merged-height cells (308, 310) without dummy filler regions, maintaining process limits on active-region jogs. The 1.5×CH architecture increases effective channel width (Weff) and drivability with reduced area penalty compared to conventional 2×CH merged-height cells (310). The merged-height cell architecture enables merged-height standard-cell libraries for sub-3 nm nodes, improving performance, area efficiency, and routing compatibility in advanced integrated-circuit design.

## Description

### TECHNICAL FIELD

The disclosure generally relates to semiconductor device layout and cell architecture and methods of fabricating semiconductor devices. More particularly, the subject matter disclosed herein relates to improvements in merged-height cell configurations, also known as hyper or booster cells, that enable improved drive current and area efficiency.

### BACKGROUND

To meet the increased demand for electronic devices with faster speeds and/or lower power consumption, semiconductor devices with high reliability, high performance, and/or multiple functions are desired. To satisfy these types of demands, the complexity and/or integration density of semiconductor devices are being increased, resulting in smaller manufacturing designs and patterns for the semiconductor devices.

As semiconductor device geometries continue to shrink into the sub-3 nm regime, device performance and area efficiency are becoming increasingly constrained by the limitations of traditional cell architectures.

### SUMMARY

The invention is set out in the appended claims.

The present disclosure addresses the above and other limitations by introducing a merged-height cell of approximately 1.5× the height of the base unit cell that enables direct or near-direct abutment with minimized filler requirements.

The present disclosure also provides a merged cell architecture incorporating a merged-height cell having a height approximately 1.5 times that of a base unit cell (1.5× cell height). The merged-height cell is configured to improve device drivability while minimizing the area penalty and layout disruption associated with traditional double-height booster cells.

In one embodiment, the base unit cells are arranged in a vertical P/N/P/N configuration, while the merged-height cells follow an inverse P/N/N/P configuration. The merged-height cell is positioned with a quarter-cell-height vertical offset relative to the adjacent base unit cell such that the nanosheet centers of the N-type Field-Effect transistor (NFET) and P-type Field-Effect transistor (PFET) active regions in the merged-height cell align with the corresponding nanosheets in the base cell. This alignment maintains continuity across cell boundaries and ensures that the jog between adjacent active regions remains within process limits, thereby permitting direct abutment of booster and base cells without the need for dummy fillers.

The merged architecture allows the merged-height cell to be placed horizontally adjacent to base cells while maintaining process-compatible alignment of nanosheets and contacts. The design further permits vertical abutment with only a quarter-row filler, reducing the area overhead compared to conventional double-height implementations that require half-row fillers or larger. In some embodiments, where the merged-height cell incorporates aggressively scaled P-N spacing, a dielectric isolation wall may be employed between the P- and N-type regions to maintain device isolation and suppress parasitic coupling.

By using a 1.5 × cell height (CH) rather than a 2 × cell height (CH), the techniques of the present disclosure achieve a balanced improvement in effective channel width (Weff) and drivability while maintaining efficient standard-cell placement and routing. The result is a compact standard-cell library architecture that enhances performance and layout flexibility with minimal impact on chip-level PPA metrics.

In an embodiment, a semiconductor architecture comprises a first cell including vertically stacked active regions of alternating conductivity type; and a second cell having an intermediate height greater than a height of the first cell and less than about two times the height of the first cell, the second cell including vertically stacked active regions of alternating conductivity type, wherein the second cell is positioned to be a threshold distance from the first cell, such that a nanosheet center of a transistor-device active region in the second cell aligns with a nanosheet center in the first cell.

In an embodiment, a computer-implemented method of designing a semiconductor floorplan, comprises forming a first cell including vertically stacked active regions of alternating conductivity type; forming a second cell having an intermediate height greater than a height of the first cell and less than about two times the height of the first cell, the second cell including vertically stacked active regions of alternating conductivity type; and positioning the second cell a threshold distance from the first cell such that a nanosheet center of a transistor-device active region in the second cell aligns with a nanosheet center in the first cell.

In an embodiment, a system comprises a processor; and memory storing instructions, which when executed, control the processor to: form a first cell including vertically stacked active regions of alternating conductivity type; form a second cell having an intermediate height greater than the height of the first cell and less than about two times the height of the first cell, the second cell including vertically stacked active regions of alternating conductivity type; and position the second cell a threshold distance from the first cell such that a nanosheet center of a transistor-device active region in the second cell aligns with a nanosheet center in the first cell.

### BRIEF DESCRIPTION OF THE DRAWING

In the following section, the aspects of the subject matter disclosed herein will be described with reference to exemplary embodiments illustrated in the figures, in which:
FIG. 1 is a block diagram illustrating a computer system for performing a semiconductor layout design, including operations used to implement merged-height cell architectures according to an embodiment.
FIG. 2 is a flow chart illustrating a method of designing and fabricating a semiconductor device incorporating merged-height cell generation according to an embodiment.
FIG. 3 illustrates a merged cell architecture including a merged-height cell having a height of approximately 1.5×CH and aligned nanosheet centers enabling direct abutment with a base unit cell according to an embodiment.
FIG. 4 is a flow chart illustrating a method of designing a merged cell semiconductor floorplan using merged-height cells according to an embodiment.
FIG. 5 illustrates another merged cell architecture configured to accommodate wider nanosheet base cells according to an embodiment.
FIG. 6 illustrates double-height hyper cells that introduce substantial area penalties and abutment misalignment according to an embodiment.
FIG. 7 illustrates merged cell designs requiring wide filler and half-row alignment structures according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

As used herein, the term "merged-height cell" refers to a cell having a height approximately 1.5× the base unit cell height (1.5×CH), previously referred to in some contexts as a 'hyper' or 'booster' cell.

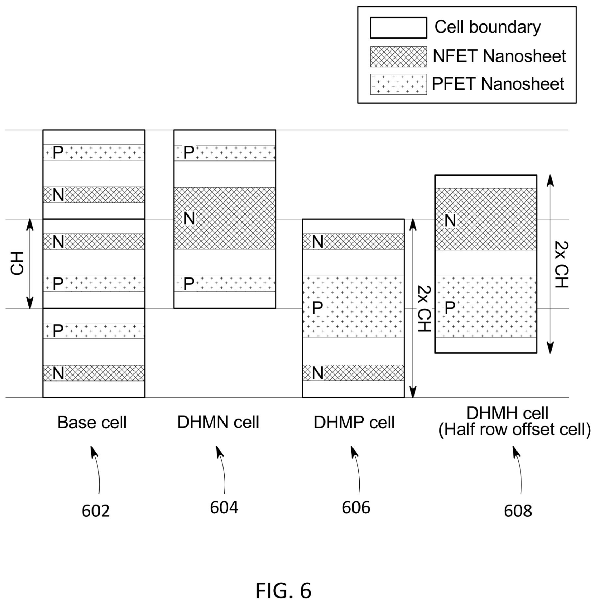

FIG. 6 illustrates an ultra high density (UHD) cell design using hyper cells.

Typically, base cells 602 follow a vertical P/N/N/P active-region placement to maintain symmetry and process compatibility, as shown in FIG. 6. However, as gate pitch and contact pitch are aggressively scaled, the effective channel width (Weff) of such base cells decreases, reducing drivability and limiting performance for high-current applications.

To compensate for reduced Weff, "hyper cells" or "booster cells" have been introduced in standard-cell libraries. These cells can increase the available active area and therefore improve drive strength relative to the aggressively scaled base cells. Generally, hyper cells are implemented at approximately twice the height of a base unit cell (2× cell height (CH)). Exemplary hyper cells are illustrated in FIG. 6, for example, a double-height merged-N type (DHMN) cell 604, double-height merged-P type (DHMP) cell 606 and a double-height merged PN with half row offset cell 608.

However, this height increase can cause multiple drawbacks during cell placement and routing.

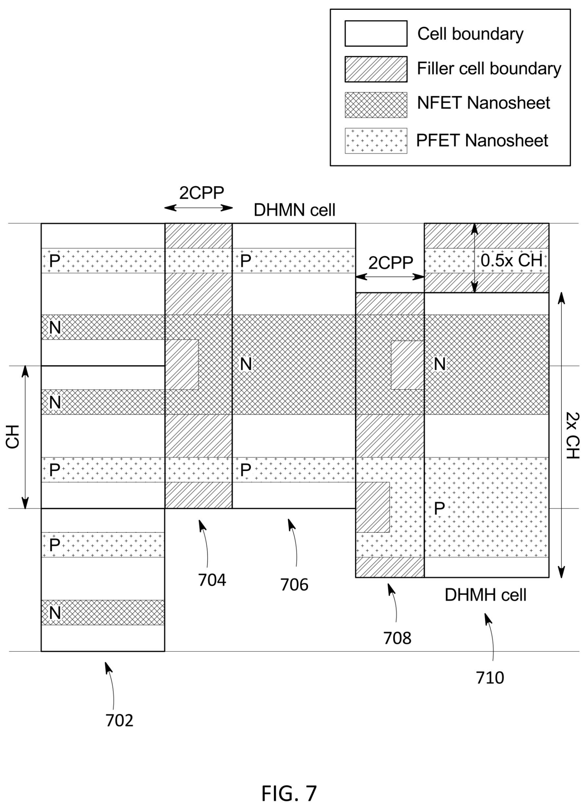

FIG. 7 illustrates a merged cell design using hyper cells and filler cells.

In particular, a wide filler 704 - often two contact-poly pitches (2CPP) in width - may be required to abut the hyper cell 706 with adjacent base cells 702 due to the large nanosheet jogs at the abutment boundary, as shown in FIG. 7. Similarly, half-row fillers 708 may be required to vertically align double-height merged-height (DHMH) cells 710 with surrounding base or booster cells. These fillers contribute to an area penalty, placement disruption, and degradation of post-route power, performance, and area (PPA) metrics. Furthermore, the significant Weff gap between the base and hyper or booster cells introduces discontinuities in device behavior and complicates physical design optimization.

The present disclosure provides a merged-height cell architecture that provides enhanced drivability compared with the base unit cell while reducing the area penalty and abutment complexity associated with traditional double-height hyper or booster cells.

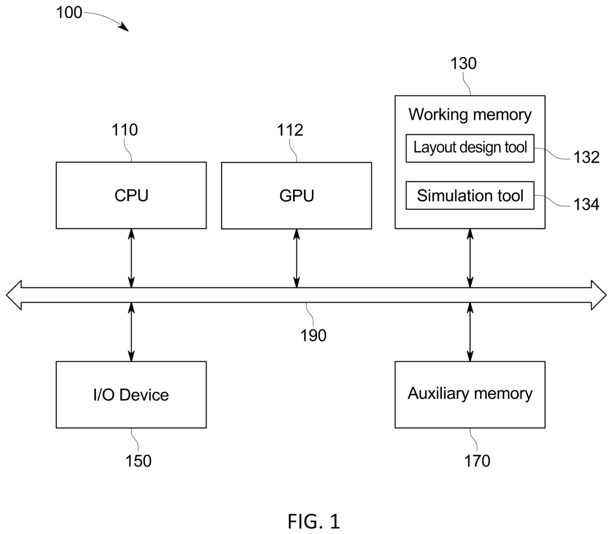

FIG. 1 is a block diagram illustrating a computer system 100 for performing a semiconductor design process including creation and verification of the merged-height cell architecture disclosed herein, according to some embodiments of the present disclosure. The system 100 provides an environment in which layout design tools, placement engines, and simulation frameworks are executed to generate standard-cell libraries incorporating base unit cells and merged-height cells having a height of approximately 1.5×CH.

Referring to FIG. 1, the computer system 100 may include a central processing unit (CPU) 110, a graphic processing unit (GPU) 112, a working memory 130, an input-output device 150, and an auxiliary memory device 170. In some embodiments, the computer system 100 may be a customized system for performing a layout design process. Furthermore, the computer system 100 may be configured to execute various design and check simulation programs.

The CPU 110 may be configured to run a variety of software programs, such as application programs, operating systems, and/or device drivers. For example, the CPU 110 may be configured to run an operating system (not shown) loaded on the working memory 130. Furthermore, the CPU 110 may be configured to run various application programs on the operating system. For example, the CPU 110 may be configured to run a layout design tool 132 and/or a simulation tool 134 loaded on the working memory 130. Optionally, GPU 112 may be configured to run the layout design tool 132 and/or the simulation tool 134 loaded on the working memory 130 to offload parallel computations with the CPU 110 and lessen the computing burden of the CPU 110.

The CPU 110 and/or optional GPU 112 may execute electronic design automation (EDA) tools used to construct the merged-height cell, including operations for defining its P/N/N/P active-region arrangement, establishing the approximately 0.25×CH vertical offset relative to adjacent base unit cells, and evaluating nanosheet-center alignment across shared boundaries.

The operating system or application programs may be loaded on the working memory 130. For example, when the computer system 100 starts a booting operation, an operating system image (not shown) stored in the auxiliary memory device 170 may be loaded on the working memory 130 according to a booting sequence. In the computer system, overall input/output operations may be managed by the operating system. Some application programs, which may be selected by a user and/or be provided for basic services, may be loaded on the working memory 130. According to some embodiments of the present disclosure, the layout design tool 132 and/or OPC tool 134 may be loaded on the working memory 130, from the auxiliary memory device 170. The working memory 130 may store layout data, placement constraints, and process design rules that allow the system 100 to determine whether the merged-height cell satisfies jog-limit requirements, contact-alignment tolerances, and abutment compatibility with 1×CH base cells.

The layout design tool 132 may provide a function for changing biasing data for specific layout patterns. For example, the layout design tool 132 may be configured to allow the specific layout patterns to have shapes and positions different from those defined by a design rule. The layout design tool 132 may be configured to perform a design rule check (DRC) under the changed condition of the bias data. The layout design tool 132 enables the designer to instantiate merged-height cells within a floorplan and analyze their interaction with neighboring cells, including the reduction of filler requirements compared to traditional double-height architectures.

The simulation tool 134 may be configured to perform an OPC process on layout data, which is obtained by the layout design tool 132. The working memory 130 may include one or more volatile memory devices (e.g., static random access memory (SRAM) and/or dynamic random access memory (DRAM) devices) and/or nonvolatile memory devices (e.g., phase-change random access memory (PRAM), magnetoresistive random access memory (MRAM), resistive random access memory (ReRAM), ferroelectric random access memory (FRAM), and/or NOR flash memory devices). The simulation tool 134 may evaluate electrical continuity, device isolation, and Weff scaling resulting from the merged-height configuration, as well as lithographic and pattern-alignment characteristics associated with nanosheet placement.

The input-output device 150 may be configured to control user input and output operations of user interface devices. For example, the input-output device 150 may include a keyboard or a monitor, allowing a designer to input relevant information. Input/output device 150 allows designers to modify placement rules, specify merged-height cell usage within timing-critical regions, and visualize the resulting layout. By using the input-output device 150, the designer may receive information on several regions or data paths, to which adjusted operating characteristics will be applied, of a semiconductor device. The input-output device 150 may be configured to display a progress status or a process result of the OPC tool 134.

The auxiliary memory device 170 may serve as a storage medium for the computer system 100. The auxiliary memory device 170 may be configured to store application programs, an operating system image, and various data. The auxiliary memory device 170 may be provided in the form of one of memory cards (e.g., MultiMediaCard (MMC), embedded MMC (eMMC), Secure Digital (SD), MicroSD, and so forth) or a hard disk drive (HDD). The auxiliary memory device 170 may include a NAND flash memory device with a large memory capacity. In some embodiments, the auxiliary memory device 170 may include at least one of next-generation nonvolatile memory devices (e.g., PRAM, MRAM, ReRAM, or FRAM) or NOR flash memory devices. The auxiliary memory device 170 may maintain libraries of merged-height cells, design rule files, and process-technology data.

A system interconnector 190 may serve as a system bus for realizing a network in the computer system. The CPU 110, the working memory 130, the input-output device 150, and the auxiliary memory device 170 may be connected to each other through the system interconnector 190, and thus, data may be exchanged therebetween. However, the system interconnector 190 may not be limited to the previously described configuration. For example, it may further include one or more additional elements for increasing efficiency in data communication.

Using this computer system 100, a designer may construct, validate, and integrate merged-height cells into advanced semiconductor layouts, ensuring that the 1.5×CH architecture delivers improved drivability, nanosheet alignment, and reduced placement disruption compared to conventional hyper-cell approaches.

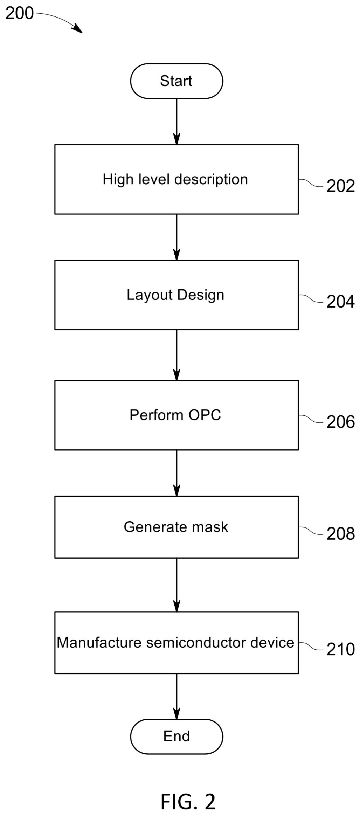

FIG. 2 is a flow chart illustrating a method 200 of designing and fabricating semiconductor devices, according to some embodiments of the present disclosure.

It is to be appreciated that the design process of the semiconductor device is or corresponds to an operation of designing a layout for a circuit, and may be performed using a tool for designing a circuit, e.g., layout design tool 132. The tool may be a program including a plurality of instructions executed by a CPU 110 and/or GPU 112. Accordingly, the designing operation of the semiconductor device may be or may include a computer implemented operation for designing a circuit.

Referring to FIG. 2, a design process for a semiconductor integrated circuit may be performed using the computer system 100 described with reference to FIG. 1, in step 202. For example, in the design process, an integrated circuit to be designed may be described in terms of a computer language (e.g., C language, Very High Speed Integrated Circuit Hardware Description Language (VHDL), Verilog, etc.). Circuits designed by this design process may be more concretely described by a register transfer level (RTL) coding or a simulation. Furthermore, codes generated by the RTL coding may be converted into a netlist, and the results may be combined with each other to wholly describe a semiconductor device. The combined schematic circuit may be verified by a simulation tool. In certain embodiments, an adjusting step may be further performed, based on a result of the verification step.

A layout design process may be performed to realize a logically complete form of the semiconductor integrated circuit on a silicon wafer, in step 204. For example, the layout design process may be performed, based on the schematic circuit prepared in the high-level design process or the corresponding netlist. The layout design process may include a routing step of placing and connecting various standard cells that are provided from a cell library, based on a predetermined design rule.

In some embodiments, the layout design process may include a floorplan operation, a power plan operation, a placement operation, and a clock tree synthesis (CTS) operation, a routing operation, and a virtual analysis (what-if-analysis) operation.

The floor plan operation may be or correspond to an operation of performing physical designing by cutting and moving a logically designed schematic circuit. In the floor plan operation, a memory and/or a functional block may be disposed. In the floor plan operation, for example, functional blocks to be disposed adjacent to each other may be identified, and space for the functional blocks may be allocated in consideration of available space, required performance and the like. For example, the floor plan operation may include generating a site-row and forming a metal routing track on the generated site-row. The site-row is/includes a frame for disposing standard cells stored in a cell library according to a prescribed design rule. Standard cells having the same height may be disposed in respective rows. A site for disposing the standard cells may be provided such that standard cells of some rows may have a height different from that of standard cells of other rows.

The power plan operation may be an operation of disposing patterns of wirings connecting a local power source, for example, a driving voltage and/or a ground, to the disposed functional blocks. The placement operation is an operation of disposing patterns of elements constituting the functional block, and may include disposing standard cells. The CTS operation may be or correspond to an operation of generating patterns of signal lines of a center clock related to a response time determining the performance of the semiconductor device. Subsequently, the routing operation may be or correspond to an operation of generating a routing structure or an upper wiring structure including second wiring lines connecting the disposed standard cells. The virtual analysis operation may be or correspond to an operation of verifying and correcting the generated layout.

An optical proximity correction (OPC) step may be performed, in step 206. The OPC step may be performed to correct optical proximity effects, which may occur when a photolithography process is performed on a silicon wafer using a photomask manufactured based on the layout. The optical proximity effect may be an unintended optical effect (such as wave coupling or diffraction) which may occur in the exposing process using the photomask manufactured based on the layout. In the OPC step 206, the layout may be modified to have a reduced difference in shape between designed patterns and actually-formed patterns, which may be caused by the optical proximity effects. As a result of the OPC step 206, the shapes and positions of patterns in the designed layout may be changed or biased.

A photomask may be manufactured, based on the layout modified by the OPC step, in step 208.

The photomask manufactured may be used to manufacture a semiconductor device, in step 210. In the actual fabricating process, the exposing and etching steps may be repeatedly performed, and thus, patterns defined in the layout design process may be sequentially formed on a semiconductor substrate, for example, a silicon wafer.

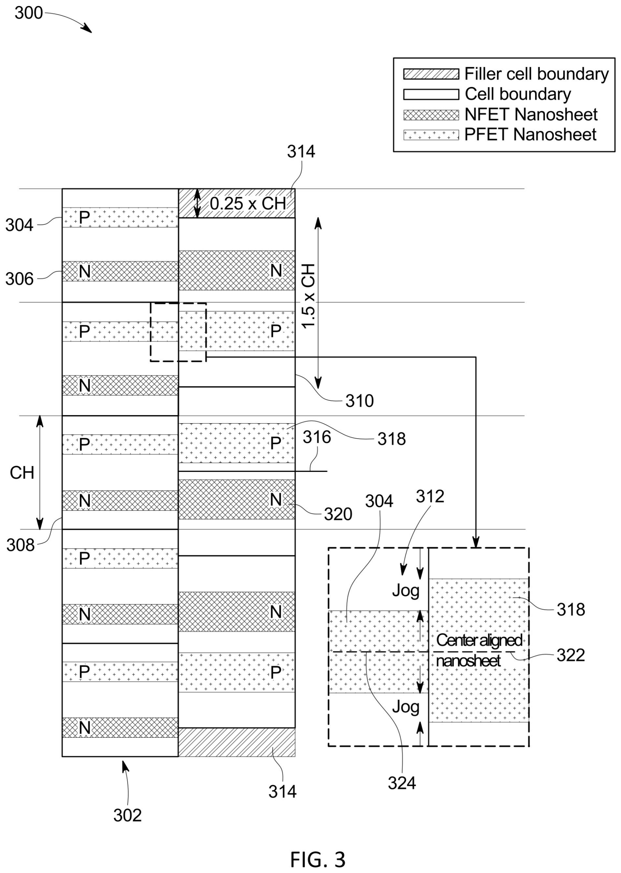

FIG. 3 illustrates a merged cell design according to an embodiment.

Referring now to FIG. 3, an embodiment of an advanced merged cell design 300 is illustrated. In advanced semiconductor technology nodes, standard cells 302 are typically formed as repeating units comprising alternating P-type and N-type active regions 304, 306 respectively in a vertical direction, often arranged in a P/N/P/N configuration. Each cell 308 defines a unit cell height (CH), which corresponds to a single row in a standard-cell library. The present disclosure provides a merged-height cell 310 (also known as a hyper or booster cell) having a height of approximately 1.5 × CH.

The merged cell architecture 300 allows base unit cells 302 and merged-height cells 310 to be combined in the same layout, providing a balance between area efficiency and increased drive current. The merged-height cell 308 enhances transistor width and performance while maintaining compatibility with existing design rules governing the placement and abutment of standard cells.

The base unit cell 302 follows a conventional P/N/P/N vertical placement of device regions. The merged-height cell, by contrast, follows an inverted or complementary P/N/N/P vertical sequence. The merged-height cell is vertically offset by approximately one-quarter of the base cell height (0.25×CH) relative to the base cell. This offset enables the nanosheet centers of the NFET and PFET active regions in the merged-height cell 310 to align with the respective active regions of the base cell 302.

By ensuring nanosheet center alignment, the jog 312 between adjacent active regions at the cell boundary is maintained within allowable process tolerances. This geometric relationship enables direct abutment of the merged-height cell and the base cell without requiring dummy cells or filler regions to maintain electrical or structural continuity.

In the architecture of the present disclosure, the merged-height cell 310 can be placed horizontally adjacent to one or more base cells 308 while maintaining nanosheet and contact alignment. The boundary between the merged-height and base cells is configured such that NFET and PFET active regions abut directly, reducing parasitic discontinuities and simplifying device integration.

Vertically, the merged-height cell 310 requires only a quarter-row filler 314 (0.25×CH) for alignment when abutting with base cells in neighboring rows. This contrasts with traditional double-height (2×CH) hyper cells, which require half-row fillers (0.5×CH) or more to achieve vertical alignment. The reduced filler requirement minimizes area overhead and simplifies cell placement and routing during automated physical design.

In embodiments where the merged-height cell incorporates reduced P-N spacing to achieve higher transistor density, a dielectric isolation wall 316 may be introduced between the P-type and N-type active regions, e.g., P-type active region 318 and N-type active region 320. The purpose of the dielectric isolation wall 316 is to maintain NFET-PFET device isolation as the spacing between the N and P nanosheets is reduced, preventing undesired electrical coupling and suppressing the risk of shorting the epitaxial regions of the two devices. The isolation wall 316 maintains device integrity and mitigates leakage or parasitic effects caused by proximity between regions of opposite polarity. The structure remains compliant with advanced lithography and process integration constraints, such as fin pitch, gate pitch, and nanosheet alignment tolerances.

The NFET and PFET active regions in the merged-height cell are positioned such that their centers correspond to the centers of the NFET and PFET active regions in the adjacent base cell. As shown in detail A of FIG. 3, a center 322 of PFET active region in the merged-height cell corresponds to the center 324 of the PFET active region 304 in the adjacent base cell. The active jogs are thus limited to within process limits, permitting seamless abutment and improved design uniformity across cell boundaries.

The 1.5×CH merged-height cell architecture of the present disclosure bridges the Weff gap between the standard base cell and the conventional 2×CH booster cell. This configuration provides a meaningful increase in effective transistor width and drive current, thereby enhancing circuit performance without incurring the area penalties typical of larger booster cells. Because the 1.5×CH merged-height cell can directly abut base cells without wide fillers or dummy regions, post-route power, performance, and area (PPA) metrics are significantly improved.

Although certain embodiments describe the merged-height cell as having a height approximately 1.5 times that of the first or base unit cell, the ratio or absolute height of the merged-height cell may vary, and any intermediate height greater than the first cell height and less than a double-height cell is contemplated herein.

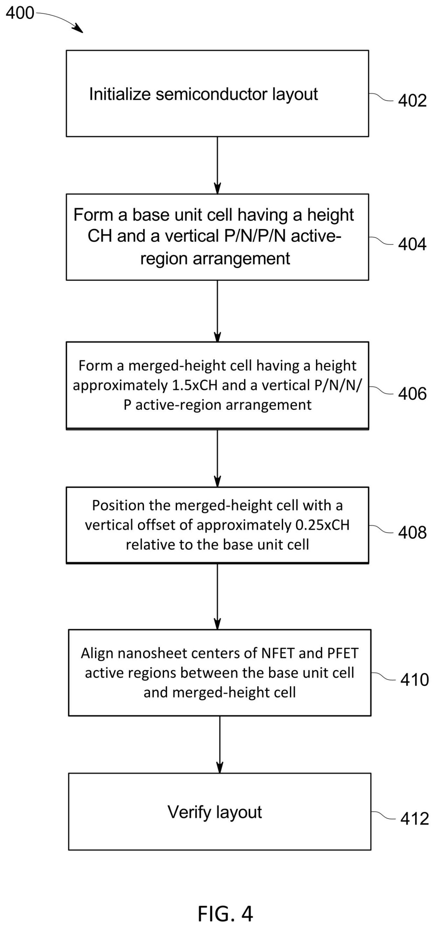

FIG. 4 illustrates a flow diagram of a method 400 for designing a merged cell semiconductor floorplan using hyper cells in accordance with the present disclosure.

Referring to FIG. 4, the method begins at step 402, where a semiconductor layout is initialized within an electronic design automation (EDA) environment, for example, system 100 as shown in FIG. 1. In step 404, a base unit cell 302 is formed having a cell height CH and a vertical P/N/P/N active-region arrangement. In step 406, a merged-height cell 310 is formed having a height approximately 1.5×CH and a vertical P/N/N/P active-region arrangement. The merged-height cell 310 is positioned with a vertical offset of approximately 0.25×CH relative to the base unit cell, in step 408. Next, in step 410, nanosheet centers of NFET and PFET active regions between the base unit cell and the merged-height cell are aligned such that the cells abut directly without requiring dummy filler structures. At step 412, the layout is verified and optimized to achieve improved performance, power, and area characteristics.

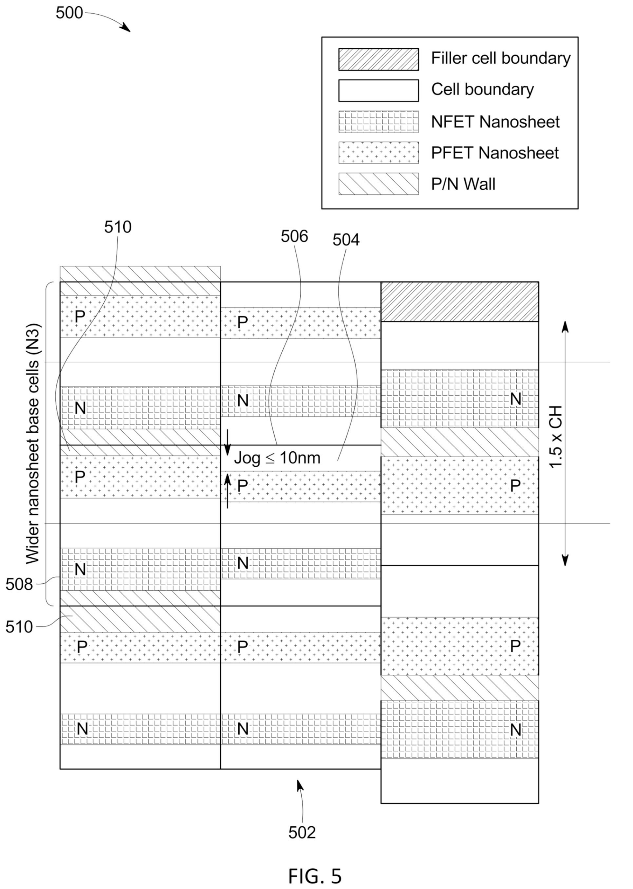

FIG. 5 illustrates another merged cell design including wider nanosheet base cells according to an embodiment.

Referring to FIG. 5, a 1.5 x CH merged-height cell architecture 500 with wider nanosheet base cells is illustrated. The merged-height cell architecture of the present disclosure accommodates base cells with increased nanosheet width while maintaining alignment and minimizing area penalties. The architecture limits the nanosheet width of an MBCFET base cell 502 to ensure the nanosheet jog 504 at the cell boundary 506 remains within the process limits for direct horizontal abutment and that the N/P spacing requirement is satisfied. To achieve this, a forksheet transistor architecture is employed for implementing wider nanosheet base cells 508 within the 1.5× cell-height (CH) merged-height cell framework. These wider nanosheet base cells can abut directly with MBCFET base cells 502 without requiring filler cells for side-by-side alignment, although vertical abutment may involve patterning multiple wall thicknesses 510 to maintain the structural and electrical integrity of the design.

In certain embodiments, the merged-height cell employs a forksheet transistor architecture that positions an isolation wall between opposite-type active regions, allowing wider nanosheet base cells-having greater nanosheet width than those of the base unit cell-to be aligned with adjacent P-type and N-type regions while maintaining boundary jog and spacing within process limits.

The present disclosure enables a merged cell library in which designers may selectively deploy 1×CH base cells and 1.5×CH merged-height (hyper or booster) cells according to performance and area requirements. This flexibility supports a fine-grained trade-off between drive strength and density, facilitating optimization for a wide range of circuit applications including critical-path logic, clock drivers, and input/output interfaces.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus.

Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus.

A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A semiconductor architecture comprising:
a first cell (308) including vertically stacked active regions of alternating conductivity type; and
a second cell (310) having an intermediate height greater than a height of the first cell (308) and less than about two times the height of the first cell (308), the second cell (310) including vertically stacked active regions of alternating conductivity type,
wherein the second cell (310) is positioned to be a threshold distance from the first cell (308), such that a nanosheet center of a transistor-device active region in the second cell aligns with a nanosheet center in the first cell (308).

2. The architecture of claim 1, wherein the second cell (310) has a height approximately one and one-half times the height of the first cell (308).

3. The architecture of claim 1 or 2, wherein the second cell (310) is vertically abutted with the first cell (308) using a filler structure (314) having a height less than the height of the first cell (308).

4. The architecture of any one of claims 1 to 3, wherein the second cell (310) and the first cell (308) are configured such that nanosheet and contact features remain aligned across their shared boundary.

5. The architecture of any one of claims 1 to 4, wherein the second cell (310) includes a dielectric isolation wall (316) between adjacent transistor-device active regions where spacing between active regions is below a process-defined minimum threshold.

6. The architecture of any one of claims 1 to 5, wherein second cell (310) is vertically offset relative to the first cell (308) by approximately one-quarter of the height of the first cell (308).

7. The architecture of any one of claims 1 to 6, wherein the second cell comprises a forksheet transistor structure configured to align cells (508) having a nanosheet width greater than the nanosheet width of the first cell (308) with opposite-type active regions.

8. The architecture of any one of claims 1 to 6, wherein the second cell accommodates first cells (508) having increased nanosheet width by employing a forksheet architecture.

9. The architecture of claim 8, wherein the forksheet architecture includes an isolation wall positioned between adjacent transistor-device active regions.

10. A computer-implemented method of designing a semiconductor floorplan, comprising:
forming (404) a first cell (308) including vertically stacked active regions of alternating conductivity type;
forming (406) a second cell (310) having an intermediate height greater than a height of the first cell (308) and less than about two times the height of the first cell (308), the second cell including vertically stacked active regions of alternating conductivity type; and
positioning (408) the second cell (310) a threshold distance from the first cell (308) such that a nanosheet center of a transistor-device active region in the second cell (310) aligns with a nanosheet center in the first cell (308).

11. The method of claim 10, wherein forming the second cell (310) includes assigning the second cell (310) a height approximately one and one-half times the height of the first cell (308).

12. The method of claim 10 or 11, further comprising designing the floorplan such that the second cell (310) is vertically abutted with the first cell (308) using a filler structure having a height less than the height of the first cell (308).

13. The method of any one of claims 10 to 12, further comprising positioning the second cell (310) relative to the first cell (308) such that nanosheet and contact features of the two cells remain aligned across a shared boundary.

14. The method of any one of claims 10 to 13, further comprising incorporating, into the second cell (310), a dielectric isolation wall (316) between adjacent transistor-device active regions where the spacing between the active regions is below a process-defined minimum threshold.

15. The method of any one of claims 10 to 14, further comprising vertically offsetting the second cell (310) relative to the first cell (308) by approximately one-quarter of the height of the first cell (308).
